# EUROPÄISCHE PATENTSCHRIFT

(11) **EP 0 431 342 B1**
(45) Veröffentlichungstag und Bekanntmachung des Hinweises auf die Patenterteilung: **15.02.1995**
(21) Anmeldenummer: 90121440.3
(22) Anmeldetag: 09.11.1990
(51) Int. Cl.: B62K 19/34

(54) **Tretlagereinheit zum Einbau in Tretlagergehäuse von Fahrrädern od. dgl. und Verfahren zum Zusammenbau der Tretlagereinheit**
Crank bearing unit for insertion into the crank bearing casing of a bicycle or the like and method of assembly
Ensemble de pédalier pour montage dans un boîtier de pédalier de bicyclette ou similaire et procédé de montage

(30) Priorität: 06.12.1989 DE 3940274
(43) Veröffentlichungstag der Anmeldung: 12.06.1991
(73) Patentinhaber: Hoffmann, Joachim, D-58089 Hagen (DE)
(72) Erfinder: Hoffmann, Joachim, D-58089 Hagen (DE)
(74) Vertreter: Eichler, Peter, Dipl.-Ing.

(56) Entgegenhaltungen:
- DE-A- 1 450 021
- FR-A- 586 077
- FR-A- 661 561
- GB-A- 584 707
- GB-A- 2 166 810

## Beschreibung

Die Erfindung bezieht sich auf eine Tretlagereinheit zum Einbau in Tretlagergehäuse von Fahrrädern od.dgl., mit einem aus einer langen und einer darauf endseitig aufzusetzenden kurzen, jeweils aus Kunststoff gefertigten Flanschhülse bestehenden Einbaugehäuse, das in das Tretlagergehäuse einzubauen ist, und mit im Einbaugehäuse beidendig angeordneten metallischen, insbesondere stählernen Kugellagern für die das Einbaugehäuse zentral durchsetzende Tretlagerwelle, wobei die Lagerkugeln außen unmittelbar auf dem Kunststoff des mit entsprechend eingearbeiteten Kugellaufrillen versehenen Einbaugehäuses laufen. Weiterhin betrifft die Erfindung auch ein Verfahren zum Zusammenbau der Tretlagereinheit.

Eine Tretlagereinheit obiger Art ist durch die GB-A-21 66 810 bekannt. Sie kann wie auch andere bekannte ähnliche Tretlagereinheiten, wie z.B. nach der DE-A-34 07 120 und der DE-A-34 34 314, leicht in das Tretlagergehäuse bzw. in die entsprechend ausgebildete Rahmenmuffe am Fahrrad od.dgl. eingebaut werden, unterscheidet sich von letzteren jedoch dadurch, daß ihre Lagerkugeln nicht auf besonderen in die Kunststoff-Flanschhülsen eingebauten stählernen Lagerschalen, sondern unmittelbar auf dem Kunststoff der beiden Flanschhülsen laufen, was sowohl herstellungs- wie auch wartungsmäßig von Vorteil ist. In all diesen Fällen besteht jedes zu beiden Enden der Tretlagerwelle angeordnete Kugellager aus je einer Reihe von sowohl an der einen wie auch an der anderen Flanschhülse sich abstützenden Lagerkugeln. Das erfordert beim Zusammenbau der Tretlagereinheit eine sorgfältige axiale Abstimmung der beiden Flanschhülsen, damit diese den auf der Tretlagerwelle abstandsmäßig festliegenden Kugellaufspuren exakt angepaßt werden. Darüberhinaus bedingt die beidendig nur einreihige Lagerkugelanordnung, daß zumindest bei der unmittelbaren äußeren Abstützung der Lagerkugeln am Kunststoff der Flanschhülsen die Tretlagereinheit nur recht begrenzte Beanspruchungskräfte aufnehmen kann.

Der Erfindung liegt daher die Aufgabe zugrunde, eine Tretlagereinheit der eingangs erwähnten Gattung zu schaffen, die die vorgenannten Mängel nicht besitzt, vielmehr bei einfacherer Bauart und leichterer Montierbarkeit auch höheren Beanspruchungen durchaus noch gewachsen ist.

Diese Aufgabe wird erfindungsgemäß dadurch gelöst, daß an jedem Ende des Einbaugehäuses an den gegenüberliegenden Stellen der Tretlagerwelle je zwei nebeneinander angeordnete Kugellaufrillen vorgesehen sind, die zusammen mit den darin laufenden Lagerkugeln je ein Doppelkugellager bilden, wobei alle vier äußeren Kugellaufrillen in der langen Flanschhülse des Kunststoff-Einbaugehäuses liegen. Auf diese Weise kommt man zu einer Tretlagereinheit, die wegen ihrer beidendigen Doppelkugellagerung der Tretlagerwelle auch größeren Beanspruchungen gewachsen ist und die wegen der Unterbringung aller vier äußeren Kugellaufrillen in der langen Flanschhülse des Einbaugehäuses von einfacherer Bauart und leichterer Montierbarkeit ist.

Durch die FR-A-575 792, die FR-A-586 077 und die FR-A-661 561 ist es bei Fahrrad-Tretlagern bekannt gewesen, die Tretlagerwelle beidendig über Doppelkugellager im Tretlagergehäuse zu lagern. Die Lagerkugeln laufen dabei aber durchweg auf besonderen stählernen Lagerbüchsen, die jeweils einzeln für sich in die Enden des Tretlagergehäuses eingeschraubt sind. Ein Kunststoff-Einbaugehäuse für die unmittelbare Abstützung der Lagerkugeln ist hier nicht vorhanden.

Nach einem weiteren vorteilhaften Merkmal der Erfindung besitzen die jeweils paarweise von den äußeren Kugellaufrillen des Einbaugehäuses und von den gegenüberliegenden inneren Kugellaufrillen der Tretlagerwelle gebildeten Kugellaufbahnen verschieden große Durchmesser, die sich vom Tretlagerwellen-Einsteckende der langen Flanschhülse zu deren die aufgesetzte kurze Flanschhülse tragendem Ende hin zunehmend verringern. Dabei besitzt die lange Flanschhülse, in der alle vier äußeren Kugellaufrillen liegen, einen einfach abgestuften zylindrischen Innenumfang, der in seinem die im Tretlagerwellen-Einsteckende gelegenen, im Durchmesser größeren Kugellaufrillen enthaltenden Bereich eine entsprechende Erweiterung aufweist, wohingegen die Tretlagerwelle an ihrem Außenumfang zweifach abgestuft ist, nämlich einen zylindrischen Mittelbereich und zwei beidseitig davon gelegene, konisch geformte Übergangsbereiche für die darin gelegenen Kugellaufrillen unterschiedlichen Durchmessers besitzt, wobei jeder Kugellaufrille in Einsteckrichtung der Tretlagerwelle gesehen eine konische Kugelandruckzone vorgelagert ist. Eine derart beschaffene Tretlagereinheit kann überaus einfach zusammengebaut werden.

Vorteilhaft erfolgt der Zusammenbau der vorbeschriebenen Tretlagereinheit in der Weise, daß in die hochkant gestellte, mit ihrer größeren Tretlagerwellen-Einstecköffnung nach unten weisende lange Flanschhülse die Tretlagerwelle von unten in den axialen Abständen der Kugellaufbahnen entsprechenden Schritten zunehmend eingesteckt wird und dabei die Lagerkugeln jeweils in ihren verschiedenen Kugellaufbahnen entsprechend unterschiedlicher Anzahl entsprechend schrittweise in die lange Flanschhülse so lange eingefüllt werden, bis jede Kugelreihe in ihrem in der Laufrille der langen Flanschhülse, aber noch auf der vor der zugehörigen Laufrille der Tretlagerwelle gelegenen konischen Kugelandruckzone liegt, woraufhin dann durch Einpressen der Tretlagerwelle in ihre endgültige axiale Einbauposition die Lagerkugeln zum Einschnappen auch in die inneren, auf der Tretlagerwelle gelegenen Laufrillen gezwungen werden.

Anstelle des vorbeschriebenen schrittweisen Einsteckens der Tretlagerwelle und des schrittweisen Auffüllens der Kugellaufrillen können die Lagerkugeln bei Verwendung eines hinreichend adhäsiven Lagerfettes aber auch bereits vor dem Einstecken der Tretlagerwelle in die vergleichsweise tief ausgebildeten Kugellaufrillen der langen Flanschhülse eingefüllt werden, worin sie durch das Lagerfett gehalten werden, bis die Tretlagerwelle eingesteckt und schließlich in ihre endgültige Einbauposition eingepreßt wird.

Beim vorerwähnten Einpressen der Tretlagerwelle in ihre endgültige axiale Einbauposition können zugleich auch an den Enden der langen Flanschhülse gelegene Dichtungsringscheiben in an entsprechenden Stellen der Tretlagerwelle gelegene Dichtungsrillen einschnappen.

In der Zeichnung ist ein vorteilhaftes Ausführungsbeispiel einer erfindungsgemäß ausgebildeten Tretlagereinheit dargestellt. Dabei zeigen
- Fig.1: die in ein Fahrrad-Tretlagergehäuse eingebaute Tretlagereinheit in axialem Längsschnitt,
- Fig.2: die Tretlagerwelle in der Seitenansicht,
- Fig.3: einen Schnitt nach der Linie III-III der Fig.2,

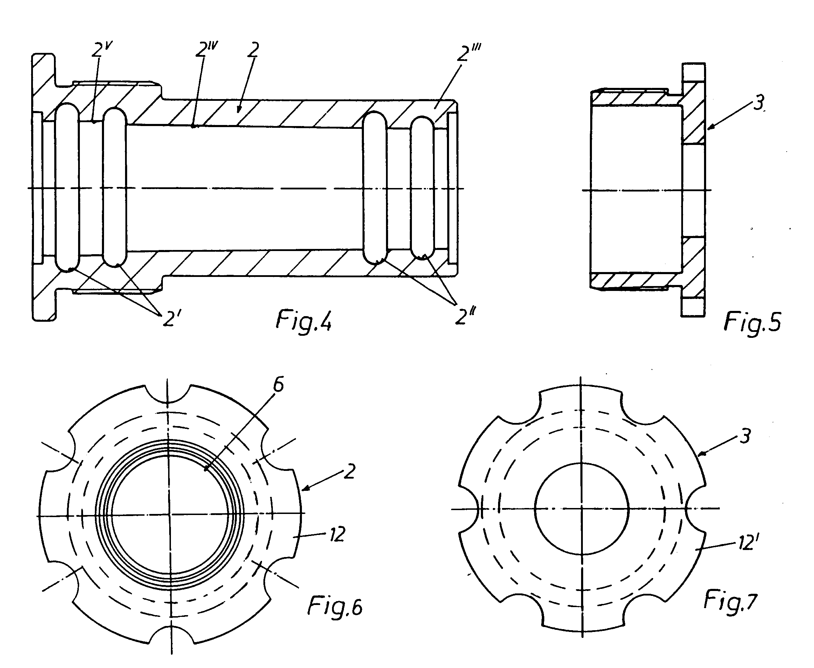

- Fig.4: die lange Flanschhülse und
- Fig.5: die kurze Flanschhülse jeweils in axialem Schnitt, während
- Fig.6 und 7: die entsprechenden Stirnansichten der langen und kurzen Flanschhülse wiedergeben.

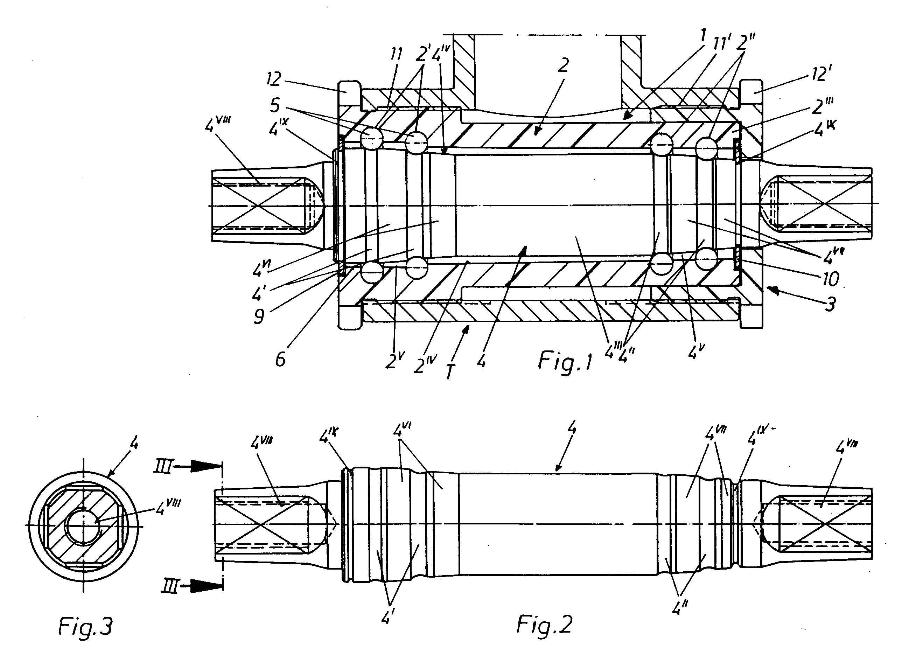

Die in Fig.1 dargestellte Tretlagereinheit besitzt ein in das Tretlagergehäuse T von Fahrrädern od.dgl. einzubauendes Einbaugehäuse 1, das aus einer langen Flanschhülse 2 und der darauf endseitig aufzusetzenden kurzen Flanschhülse 3 besteht. Beide Flanschhülsen sind aus Kunststoff gefertigt, beispielsweise aus Polyamid-Spritzkunststoff. Im Einbaugehäuse 1 ist über je ein an den Enden der langen Hülse 2 angeordnetes Doppelkugellager die das Einbaugehäuse zentral durchsetzende Tretlagerwelle 4 gelagert.

Zu diesem Zweck sind an jedem Ende der langen Flanschhülse 2 sowie an den gegenüberliegenden Stellen der Tretlagerwelle je zwei nebeneinander angeordnete Kugellaufrillen 2',2'' bzw. 4',4'' vorgesehen, die zusammen mit den darin laufenden stählernen Lagerkugeln 5 je ein endseitig gelegenes Doppelkugellager bilden. Dabei laufen die Lagerkugeln 5 außen unmittelbar auf dem Kunststoff des mit den Einbaurillen 2',2'' versehenen Einbaugehäuses bzw. seiner langen Flanschhülse 2.

Die jeweils paarweise von den äußeren Kugellaufrillen 2',2'' des Einbaugehäuses 1 und von den gegenüberliegenden inneren Kugellaufrillen 4 ',4'' der Tretlagerwelle 4 gebildeten Kugellaufbahnen besitzen durchweg verschieden große Durchmesser, und zwar verringern sich diese Laufbahndurchmesser vom Tretlagerwellen-Einsteckende 6 der langen Flanschhülse 2 zu deren die aufgesetzte kurze Flanschhülse 3 tragendem Ende 2'''

Die lange Flanschhülse 2 besitzt einen einfach abgestuften zylindrischen Innenumfang 2^{IV}, der in seinem die im Durchmesser größeren Kugellaufrillen 2' enthaltenden Bereich eine entsprechende Erweiterung 2^{V} aufweist, die zugleich die Tretlagerwellen-Einstecköffnung 6 bildet. Anders als die lange Flanschhülse 2 ist die Tretlagerwelle 4 in ihrem Lagerungsbereich an ihrem Außenumfang zweifach abgestuft. Sie besitzt einen zylindrischen Mittelbereich 4''' und zwei beidseitig davon gelegene konisch geformte Übergangsbereiche 4^{IV},4^{V} für die darin gelegenen Kugellaufrillen 4' bzw. 4''. Dabei ist jeder Kugellaufrille 4',4'' in Einsteckrichtung der Tretlagerwelle 4 gesehen eine konische Kugelandruckzone 4^{VI} bzw.4^{VII} vorgelagert.

Die Enden der Tretlagerwelle 4 sind in herkömmlicher Weise als leicht konisch verlaufende Außenvierkante ausgebildet und mit Innengewindebohrungen 4^{VIII} für die darin einzusetzenden Pedal-Befestigungsschrauben versehen.

Schließlich sind an den beiden äußeren Stirnflächen der langen Flanschhülse 2 noch Aufnahmenuten für die Dichtungsringscheiben 9 und 10 vorhanden, die mit ihren Innenumfängen in auf der Tretlagerwelle 4 angeordnete Nuten 4^{IX} hineinragen.

Der Zusammenbau der Tretlagereinheit kann in der Weise erfolgen, daß in die hochkant gestellte, mit ihrer größeren Tretlagerwellen-Einstecköffnung 6 nach unten weisende lange Flanschhülse 2 die Tretlagerwelle 4 von unten schrittweise zunehmend eingesteckt wird, wobei die einzelnen Einsteckschritte den axialen Abständen der Kugellaufbahnen 4',4'' entsprechen. Bei diesem schrittweisen Tiefereinstecken der Tretlagerwelle 4 in die Flanschhülse 2 werden die Lagerkugeln 5 jeweils in einer ihrer zugehörigen Kugellaufbahn entsprechenden Anzahl ebenfalls schrittweise eingefüllt, also jeweils so, daß zunächst die im Durchmesser größte, der Einstecköffnung 6 unmittelbar benachbarte Kugellaufbahn aufgefüllt und sodann durch weiteres Einstecken das Auffüllen der jeweils nächsten im Durchmesser entsprechend kleineren Kugellaufbahn erfolgt, dies alles so lange, bis schließlich die Kugeln jeder Kugelreihe zwar bereits in ihrer zugehörigen Laufrille 2',2'' in der langen Flanschhülse 2, jedoch noch auf der vor der zugehörigen Laufrille 4',4'' der Tretlagerwelle 4 gelegenen konischen Kugelandruckzone 4^{VI},4^{VII} liegen. Sodann werden die Lagerkugeln 5 durch weiteres Einpressen der Tretlagerwelle 4 in ihre endgültige axiale Einbauposition dazu gezwungen, in die inneren, auf der Tretlagerwelle 4 gelegenen Laufrillen 4',4'' einzuschnappen, womit eine feste nur durch entsprechend größeren Druck lösbare Verbindung zwischen der Tretlagerwelle 4, den Kugeln 5 und dem Gehäuse 1 hergestellt wird. Bei diesem letzterwähnten Einpressen der Tretlagerwelle 4 in ihre axial endgültige Position schnappen auch die an den Stirnenden der langen Hülse 2 vorhandenen Dichtungsringscheiben 9,10 in die in der Tretlagerwelle an entsprechender Stelle gelegenen Dichtungsrillen ein.

In diesem Zustand kann die lange Flanschhülse 2 mitsamt der in ihr bereits ordnungsgemäß kugelgelagerten Tretlagerwelle 4 in die am Fahrradrahmen vorhandene, das Tretlagergehäuse T bildende Aufnahmemuffe eingepreßt oder eingeschraubt werden, wozu für letzteren Fall am Außenumfang der Flanschhülse 2 ein entsprechendes Außengewinde 11 sowie ein entsprechend konturierter Schraubflansch 12 vorhanden sind. Sodann wird von der gegenüberliegenden Seite die kurze Flanschhülse 3, die mit entsprechendem Gewinde 11' und einem Schraubbetätigungsflansch 12' versehen ist, in die Rohrrahmenmuffe eingeschraubt, wobei sie sich gleichzeitig auch über das im Durchmesser kleinere Aufsteckende der langen Flanschhülse 2 schiebt.

## Patentansprüche

1. Tretlagereinheit zum Einbau in Tretlagergehäuse (T) von Fahrrädern od.dgl., mit einem aus einer langen und einer darauf endseitig aufzusetzenden kurzen, jeweils aus Kunststoff gefertigten Flanschhülse (2 bzw. 3) bestehenden Einbaugehäuse (1), das in das Tretlagergehäuse (T) einzubauen ist, und mit im Einbaugehäuse (1) beidendig angeordneten metallischen, insbesondere stählernen Kugellagern für die das Einbaugehäuse (1) zentral durchsetzende Tretlagerwelle (4), wobei die Lagerkugeln (5) außen unmittelbar auf dem Kunststoff des mit entsprechend eingearbeiteten Kugellaufrillen (2',2'') versehenen Einbaugehäuses (1) laufen, **dadurch gekennzeichnet**, daß an jedem Ende des Einbaugehäuses (1) und an den gegenüberliegenden Stellen der Tretlagerwelle (4) je zwei nebeneinander angeordnete Kugellaufrillen (2', 2'' bzw. 4',4'') vorgesehen sind, die zusammen mit den darin laufenden Lagerkugeln (5) je ein Doppelkugellager bilden, wobei alle vier äußeren Kugellaufrillen (2', 2'') in der langen Flanschhülse (2) des Kunststoff-Einbaugehäuses (1) liegen.

2. Tretlagereinheit nach Anspruch 1, **dadurch gekennzeichnet**, daß die jeweils paarweise von den äußeren Kugellaufrillen (2',2'') des Einbaugehäuses und von den gegenüberliegenden inneren Kugellaufrillen (4',4'') der Tretlagerwelle (4) gebildeten Kugellaufbahnen verschieden große Durchmesser besitzen, die sich vom Tretlagerwellen-Einsteckende (6) der langen Flanschhülse (2) zu deren die aufgesetzte kurze Flanschhülse (3) tragendem Ende (2''') hin zunehmend verringern.

3. Tretlagereinheit nach Anspruch 2, **dadurch gekennzeichnet**, daß die lange Flanschhülse (2) einen einfach abgestuften zylindrischen Innenumfang (2^{IV}) besitzt, der in seinem die im Tretlagerwellen-Einsteckende (6) gelegenen, im Durchmesser größeren Kugellaufrillen (2') enthaltenden Bereich eine entsprechende Erweiterung (2^{V}) aufweist, wohingegen die Tretlagerwelle (4) an ihrem Außenumfang zweifach abgestuft ist, nämlich einen zylindrischen Mittelbereich (4''') und zwei beidseitig davon gelegene, konisch geformte Übergangsbereiche (4^{IV},4^{V}) für die darin gelegenen Kugellaufrillen (4', 4'') unterschiedlichen Durchmessers besitzt, wobei jeder Kugellaufrille in Einsteckrichtung der Tretlagerwelle gesehen eine konische Kugelandruckzone (4^{VI} bzw. 4^{VII}) vorgelagert ist.

4. Verfahren zum Zusammenbau der Tretlagereinheit nach einem der vorhergehenden Ansprüche, **dadurch gekennzeichnet**, daß in die hochkant gestellte, mit ihrer größeren Tretlagerwellen-Einstecköffnung (6) nach unten weisende lange Flanschhülse (2) die Tretlagerwelle (4) von unten in den axialen Abständen der Kugellaufbahnen (4',4'') entsprechenden Schritten zunehmend tiefer eingesteckt wird und dabei die Lagerkugeln (5) jeweils in ihren verschiedenen Kugellaufbahnen entsprechend unterschiedlicher Anzahl entsprechend schrittweise in die lange Flanschhülse (2) so lange eingefüllt werden, bis jede Kugelreihe in ihrer zugehörigen Laufrille (2',2'') in der langen Flanschhülse (2), aber noch auf der vor der zugehörigen Laufrille (4',4'') der Tretlagerwelle (4) gelegenen konischen Kugelandruckzone (4^{VI},4^{VII}) liegt, woraufhin dann durch Einpressen der Tretlagerwelle (4) in ihre endgültige axiale Einbauposition die Lagerkugeln (5) zum Binschnappen auch in die inneren, auf der Tretlagerwelle (4) gelegenen Laufrillen (4',4'') gezwungen werden.

5. Verfahren nach Anspruch 4, bei dem anstelle des schrittweisen Einsteckens der Tretlagerwelle (4) und des schrittweisen Auffüllens der Kugellaufrillen (2', 2'') die Lagerkugeln (5) bei Verwendung eines hinreichend adhäsiven Lagerfettes bereits vor dem Einstecken der Tretlagerwelle (4) in die Kugellaufrillen (2',2'') der langen Flanschhülse (2) eingefüllt und darin durch das Lagerfett gehalten werden, bis die Tretlagerwelle (4) eingesteckt und in ihre endgültige Einbauposition eingepreßt wird.

6. Verfahren nach Anspruch 4 oder 5, **dadurch gekennzeichnet**, daß beim Einpressen der Tretlagerwelle (4) in ihre endgültige axiale Einbauposition zugleich auch an den Enden der langen Flanschhülse (2) gelegene Dichtungsringscheiben (9,10) in an entsprechenden Stellen der Tretlagerwelle (4) gelegene Dichtungsrillen einschnappen.

## Claims

1. A pedal bearing unit to be incorporated in pedal bearing housings (T) of bicycles or the like, having an installation housing (1) consisting of a long flange sleeve (2) and a short flange sleeve (3) to be placed on the end of the long flange sleeve, each made of a synthetic material, the said installation housing is to be incorporated into the pedal bearing housing (T), and having metallic, in particular steel ball bearings, disposed at both ends in the installation housing (1), for the pedal bearing shaft (4) passing through the centre of the installation housing (1), wherein the bearing balls (5) run on the outside directly on the synthetic material of the installation housing (1) provided with correspondingly incorporated ball bearing channels (2', 2''), characterised in that, at each end of the installation housing (1) and at the oppositely positioned points of the pedal bearing shaft (4), each pair of ball bearing channels disposed next to each other (2', 2'' or 4', 4'') are provided which, together with the bearing balls (5) running therein, each form a double ball bearing, wherein all four outer ball bearing channels (2', 2'') lie in the long flange sleeve (2) of the synthetic material installation housing (1).

2. A pedal bearing unit according to claim 1, characterised in that the ball bearing slides, formed in pairs by the outer ball bearing channels (2', 2'') of the installation housing and by the oppositely lying inner ball bearing channels (4', 4'') of the pedal bearing shaft (4), have different diameters which become increasingly narrow from the pedal bearing shaft insertion end (6) of the long flange sleeve (2) towards its end (2''') carrying the positioned short flange sleeve (3).

3. A pedal bearing unit according to claim 2, characterised in that the long flange sleeve (2) has a simple stepped cylindrical inner surface (2^{IV}) which comprises, in its region containing larger diameter ball bearing channels (2') lying in its pedal bearing shaft insertion end (6), a corresponding widening (2^{V}), whereas the pedal bearing shaft (4) comprises two steps on its outer surface, namely has a cylindrical middle region (4''') and two conically-shaped transitional regions (4^{IV}, 4^{V}), lying at either side thereof, for the ball bearing channels (4', 4'') of different diameters lying therein, wherein each ball bearing channel, seen in the insertion direction of the pedal bearing shaft, is positioned in front of a conically-shaped ball pressing area (4^{VI} or 4^{VII}).

4. A process for assembling the pedal bearing unit according to one of the preceding claims, characterised in that into the long flange sleeve (2) placed on edge with its larger pedal bearing shaft insertion opening (6) directed downwards, the pedal bearing shaft (4) is inserted increasingly deeper from below in the axial spacings of the steps corresponding to the ball bearing slides (4', 4'') and thus the bearing balls (5) are introduced in different numbers corresponding to their different ball bearing slides in a corresponding step-by step manner into the long flange sleeve (2) until each row of balls lies in its allocated channel (2', 2'') in the long flange sleeve (2) but still on the conically-shaped ball pressing area (4^{VI}, 4^{VII}) lying in advance of the allocated channel (4', 4'') of the pedal bearing shaft (4), whereupon, by pressing the pedal bearing shaft (4) into its final axial assembled position, the bearing balls (5) are also forced to snap into the inner channel (4', 4'') lying on the pedal bearing shaft (4).

5. A process according to claim 4, in which, instead of the step-by-step insertion of the pedal bearing shaft (4) and of the step-by-step filling of the ball bearing channels (2', 2''), the bearing balls (5), when using a sufficiently adhesive bearing grease and prior to the insertion of the pedal bearing shaft (4), are introduced into the ball bearing channels (2', 2'') of the long flange sleeve (2) and held there by the bearing grease until the pedal bearing shaft (4) is inserted and pressed into its final assembled position.

6. A process according to claim 4 or 5, characterised in that upon pushing the pedal bearing shaft (4) into its final axial assembled position, sealing ring plates (9, 10) positioned at the ends of the long flange sleeve (2) additionally snap into sealing grooves positioned at appropriate positions of the pedal bearing shaft (4).

## Revendications

1. Unité de pédalier à incorporer dans le carter de pédalier (T) de bicyclettes ou analogues, comportant un carter de montage (1), consistant en deux douilles à emboîtement (2 et 3), une longue et une courte à placer sur la première du côté extrémité, toutes deux fabriquées en matière plastique, ce carter étant à incorporer dans le carter de pédalier (T), et comportant des roulements à billes métalliques, notamment en acier, disposés aux deux extrémités dans le carter de montage (1) pour l'arbre de pédalier (4) qui passe au centre du carter de montage (1), les billes de roulement (5) circulant à l'extérieur directement sur la matière plastique du carter de montage (1) pourvu de gorges à billes (2', 2'') de forme correspondante, caractérisée en ce qu'il est prévu, à chaque extrémité du carter de montage (1) et dans des emplacements opposés de l'arbre de pédalier (4), chaque fois deux gorges à billes (2', 2'' et 4', 4'') disposées côte à côte, qui constituent, avec les billes de roulement (5) qui circulent à l'intérieur d'elles, chaque fois un double roulement à billes, les quatre gorges à billes extérieures (2', 2'') étant disposées dans la douille longue à emboîtement (2) du boîtier de montage (1) en matière plastique.

2. Unité de pédalier selon la revendication 1, caractérisée en ce que les chemins de roulement de billes, chaque fois constitués par une paire de gorges à billes extérieures (2', 2'') du carter de montage et de gorges à billes intérieures (4', 4'') opposées de l'arbre de pédalier (4), ont des diamètres de dimensions différentes, qui diminuent progressivement depuis l'extrémité d'introduction (6) pour l'arbre de pédalier de la douille longue à emboîtement (2) en direction de l'extrémité (2''') de celle-ci qui porte la douille courte à emboîtement (3) montée.

3. Unité de pédalier selon la revendication 2, caractérisée en ce que la douille longue à emboîtement (2) comporte une périphérie intérieure cylindrique (2^{IV}) à simple gradin et qui présente, dans sa zone contenant les gorges à billes (2') de plus grand diamètre situées dans l'extrémité d'introduction (6) pour l'arbre de pédalier, un élargissement (2^{V}) correspondant, tandis que l'arbre de pédalier (4) est à double gradin sur sa périphérie extérieure, à savoir une zone médiane cylindrique (4''') et deux zones de raccordement (4^{IV}, 4^{V}) de forme conique situées de part et d'autre de celle-ci, pour les gorges à billes (4', 4'') qui y sont situées, une zone conique presse-billes (4^{VI}, 4^{VII}) étant située avant chaque gorge à billes, vue dans le sens d'introduction de l'arbre de pédalier.

4. Procédé pour l'assemblage de l'unité de pédalier selon l'une des revendications précédentes, caractérisé en ce que l'arbre de pédalier (4) est introduit dans la douille longue à emboîtement (2) mise debout, avec son ouverture d'introduction (6), la plus large pour l'arbre de pédalier tournée vers le bas, l'arbre étant introduit à partir du bas de plus en plus profondément en pas correspondants aux distances axiales des chemins de roulement de billes (4', 4''), les billes (5) étant alors chargées successivement en nombre différent en fonction de leurs chemins de roulement différents dans la douille longue à emboîtement (2) jusqu'à ce que chaque série de billes soit située dans sa gorge associée (2', 2'') dans la douille longue à emboîtement (2), mais encore sur la zone conique presse-billes (4^{VI}, 4^{VII}) située avant la gorge associée (4', 4'') de l'arbre de pédalier (4), après quoi par la poussée de l'arbre de pédalier (4), vers sa position axiale finale de montage, les billes de roulement (5) sont également contraintes à entrer dans les gorges (4', 4'') intérieures situées sur l'arbre de pédalier (4).

5. Procédé selon la revendication 4, dans lequel, à la place de l'introduction pas à pas de l'arbre de pédalier (4) et du remplissage progressif des gorges à billes (2', 2''), les billes de roulement (5) sont déjà placées, avec utilisation d'une graisse pour roulements suffisamment adhésive, dans les gorges à billes (2', 2'') de la douille longue à emboîtement (2) avant l'introduction de l'arbre de pédalier (4) et y sont maintenues par la graisse pour roulements, jusqu'à ce que l'arbre de pédalier (4) soit enfoncé et pressé dans sa position finale de montage.

6. Procédé selon la revendication 4 ou 5, caractérisé en ce que, lors de la pression exercée sur l'arbre de pédalier (4) pour qu'il prenne sa position axiale finale de montage, des rondelles d'étanchéité (9, 10) placées aux extrémités de la douille longue à emboîtement (2) pénètrent simultanément dans des gorges pour garniture situées en des emplacements correspondants de l'arbre de pédalier (4).
